(19) Europäisches Patentamt
European Patent Office
Office européen des brevets

(11) EP 4 550 470 A1

(12) **EUROPEAN PATENT APPLICATION**
published in accordance with Art. 153(4) EPC

(43) Date of publication:
**07.05.2025 Bulletin 2025/19**

(21) Application number: **23831232.6**

(22) Date of filing: **21.06.2023**

(51) International Patent Classification (IPC):
***H01M 4/58** (2010.01)* ***H01M 4/36** (2006.01)*
***H01M 4/38** (2006.01)* ***H01M 4/587** (2010.01)*

(52) Cooperative Patent Classification (CPC):
**H01M 4/36; H01M 4/38; H01M 4/58; H01M 4/587;**
Y02E 60/10

(86) International application number:
**PCT/JP2023/022978**

(87) International publication number:
**WO 2024/004786 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022106451**

(71) Applicant: **Panasonic Intellectual Property Management Co., Ltd.**
**Kadoma-shi, Osaka 571-0057 (JP)**

(72) Inventor: **SHIBATA Sho**
**Kadoma-shi, Osaka 571-0057 (JP)**

(74) Representative: **Novagraaf International SA**
**Chemin de l'Echo 3**
**1213 Onex, Geneva (CH)**

# (54) NEGATIVE ELECTRODE MATERIAL FOR SECONDARY BATTERY, SECONDARY BATTERY, AND METHOD FOR MANUFACTURING NEGATIVE ELECTRODE MATERIAL FOR SECONDARY BATTERY

(57) A negative electrode material for secondary batteries includes a composite material. The composite material includes an amorphous material phase, and a silicate phase dispersed in the amorphous material phase. The amorphous material phase contains Si, O, and C. The silicate phase contains at least one element M selected from the group consisting of Li, Na, K, Mg, Ca, B, and Al.

*FIG. 2*

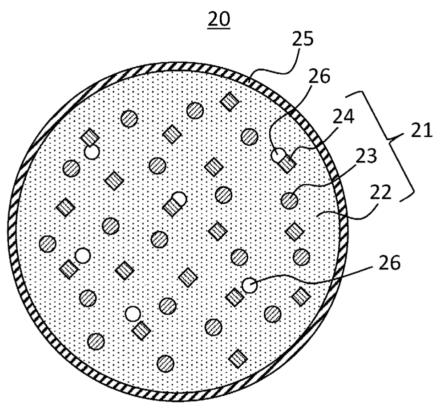


EP 4 550 470 A1

## Description

[Technical Field]

The present disclosure relates to a negative electrode material for secondary batteries, a secondary battery, and a method for producing a negative electrode material for secondary batteries.

[Background Art]

Nonaqueous electrolyte secondary batteries, especially lithium-ion secondary batteries, because of their high voltage and high energy density, have been expected as power sources for small consumer applications, power storage devices, and electric cars. With increasing demand for higher battery energy density, a material containing silicon (Si) that forms an alloy with lithium has been expected to be utilized as a negative electrode active material having a high theoretical capacity density.

Patent Literature 1 proposes a method for producing a porous amorphous material characterized by impregnating a porous resin with one or two or more kinds of an organic silicon compound selected from cross-linkable silane and siloxane, forming a cross-linked material of the organic silicon compound inside the porous resin, and heating and reacting the cross-linked material in a non-oxidizing gas at a temperature of 650 to 1350 °C, to obtain an amorphous material containing silicon, carbon, and oxygen as constituent elements and having oxidation resistance.

[Citation List]

[Patent Literature]

Patent Literature 1: Japanese Laid-Open Patent Publication No. 2007-115548

[Summary]

[Technical Problem]

The amorphous material obtained by the production method of Patent Literature 1 has a large irreversible capacity.

[Solution to Problem]

In view of the above, one aspect of the present disclosure relates to a negative electrode material for secondary batteries, including a composite material including an amorphous material phase and a silicate phase, wherein the silicate phase is dispersed in the amorphous material phase, the amorphous material phase contains Si, O, and C, the silicate phase contains an element M, and the element M is at least one selected from the group consisting of Li, Na, K, Mg, Ca, B, and Al.

Another aspect of the present disclosure relates to a secondary battery, including a positive electrode, a negative electrode, and an electrolyte, wherein the negative electrode includes the above-described negative electrode material for secondary batteries.

Still another aspect of the present disclosure relates to a method for producing a negative electrode material for secondary batteries, the method including steps of: obtaining a raw material mixture containing a first polymer which is an organosilicon polymer containing Si, O, and C, a material constituting an active phase that reacts with Li, and a compound containing an element M; and firing the raw material mixture, to produce a composite material, wherein the composite material includes an amorphous material phase, the active phase, and a silicate phase, the active phase and the silicate phase are each dispersed in the amorphous material phase, the amorphous material phase contains Si, O, and C, the silicate phase and the amorphous material phase each independently contain the element M, and the element M is at least one selected from the group consisting of Li, Na, K, Mg, Ca, B, and Al.

[Advantageous Effects]

According to the present disclosure, it is possible to reduce the irreversible capacity of a negative electrode material for secondary batteries.

While the novel features of the subject of disclosure are set forth particularly in the appended claims, the subject of disclosure, both as to organization and content, will be better understood and appreciated, along with other objects and

features thereof, from the following detailed description taken in conjunction with the drawings.

[Brief Description of Drawings]

[FIG. 1] A cross-sectional SEM image of an example of a composite material included in a negative electrode material according to one embodiment of the present disclosure.
[FIG. 2] A schematic sectional view of an example of a negative electrode material according to one embodiment of the present disclosure.
[FIG. 3] A partially cut-away schematic oblique view of a secondary battery according to one embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. For the components other than those characteristic of the present disclosure, any known components may be adopted. In the present specification, when referring to "a range of a numerical value A to a numerical value B," the range includes the numerical value A and the numerical value B. In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

The present disclosure encompasses a combination of matters recited in any two or more claims selected from plural claims in the appended claims. In other words, as long as no technical contradiction arises, matters recited in any two or more claims selected from plural claims in the appended claims can be combined.

A negative electrode material for secondary batteries according to an embodiment of the present disclosure includes a composite material including an amorphous material phase and a silicate phase. The composite material may be of any form, and may be supplied in a bulk form, in a sheet form, as a powder including a plurality of particles, or others. In the following, the particles of the composite material are sometimes referred to as "composite particles."

The silicate phase is dispersed in the amorphous material phase containing Si, O, and C. The silicate phase contains an element M (cation species). The element M is at least one selected from the group consisting of Li, Na, K, Mg, Ca, B, and Al. The silicate phase is constituted of silicate. The silicate is a compound containing silicon element (Si) and an anion.

By including a silicate phase containing an element M having a small irreversible capacity in the amorphous material phase and by replacing part of the amorphous material with the silicate phase, the large irreversible capacity attributed to the amorphous material phase can be reduced. Since the silicate phase containing an element M is dispersed in the amorphous material phase, the irreversible capacity reducing effect can be stably obtained.

In view of achieving high capacity, the composite material preferably includes an active phase that reacts with Li. The active phase is dispersed in the amorphous material phase, together with the silicate phase. In this case, in the secondary battery, a high initial capacity is obtained, and the charge-discharge efficiency is improved, leading to excellent charge-discharge cycle characteristics.

The amorphous material phase and the silicate phase are formed from a material that can exhibit a smaller capacity per unit mass (mAh/g) than the active phase. The amorphous material phase and the silicate phase undergo less volume change than the active phase or no volume change, during charging and discharging. The amorphous material phase including the silicate phase dispersed therein alleviates the stress associated with expansion and contraction of the active phase. Since the active phase is dispersed in the amorphous material phase, the side reaction between the active phase and the electrolyte solution can be suppressed.

The composite material may have a sea-island structure. In the sea-island structure, the silicate phase (or the silicate phase and the active phase) constitutes an island portion, and the amorphous material phase constitutes a continuous sea portion or a matrix. When the composite material is a powder, in one composite material particle, a plurality of island portions are dispersed in the sea portion. The island portions are desirably embedded in the sea portion. In some island portions, at least part of the surface of the island portion may be exposed without being covered with the sea portion.

(Amorphous material phase)

The amorphous material phase contains Si (silicon), O (oxygen) and C (carbon). The amorphous material phase

forms a compound in which Si, O and C are randomly bonded by covalent bonds. The amorphous material phase has, for example, Si-O-C bonds (covalent bonds). That is, the amorphous material phase is not a simple mixture or a simple composite of a plurality kinds of compounds (SiO, SiC, etc.). The amorphous material phase is a phase whose crystal structure is not specified. The amorphous material phase may form a single phase not having an interface between different materials like the one that a composite of two or more materials has. Since the amorphous material phase contains Si, O, and C as essential components, and is a phase whose crystal structure is not specified, the hardness of the composite material is increased, and the composite material can have elasticity or flexibility to alleviate the stress associated with expansion and contraction of the active phase.

In a cross section of the composite material, it is desirable that the amorphous material phase is substantially free of grain boundaries. When the amorphous material phase has a continuous structure free of grain boundaries, the hardness of the composite material increases, and the electrolyte solution is less likely to enter the grain boundaries. Thus, the side reaction involving decomposition of the electrolyte solution is suppressed, and the material becomes less prone to deterioration. In this case, the composite material can be formed as primary particles. However, the amorphous material phase may have grain boundaries if they are a few. The amorphous material phase being substantially free of grain boundaries can be confirmed by a cross-sectional SEM image of the composite material. In a cross-sectional SEM image of the composite material with a field of view of 500 $nm^2$, when the total length of the grain boundaries in the amorphous material phase is 1 nm or less, it can be said that the amorphous material phase is substantially free of grain boundaries. It is desirable to determine the length of the grain boundaries by performing the same measurement on randomly selected 10 composite particles, and averaging the measured values.

In view of reducing the irreversible capacity, the amorphous material phase preferably contains an element M (at least one selected from the group consisting of Li, Na, K, Mg, Ca, B, and Al). In this case, the amorphous material phase and the silicate phase may contain the same kind of element M, or different kinds of elements M. In particular, the amorphous material phase preferably contains at least Li as the element M. When the element M contained in the amorphous material phase is an element other than Li, during charging and discharging of a lithium-ion secondary battery including a negative electrode containing the composite material, the element other than Li is replaced with Li, and Li ions is irreversibly captured in the amorphous material phase, which may cause the capacity to decrease. When the element M contains Li, the above capacity decrease is unlikely to occur.

When the amorphous material phase is represented by a general formula (1): $M_aSiO_xN_yC_z$, the general formula (1) satisfies, for example, $0 \leq a \leq 4$, $0.1 \leq x \leq 2.5$, $0 \leq y \leq 0.5$, and $0 < 1\text{-}0.5x\text{-}0.75y < z \leq 6$. M is at least one selected from the group consisting of Li, Na, K, Mg, Ca, B, and Al. Such a composition is empirically determined from the composition of the amorphous material phase produced by a later-described production method. During charging and discharging, Li can be trapped as irreversible capacity.

In view of reducing the irreversible capacity, the amorphous material phase preferably contains an element M. It is preferable that the amorphous material phase is doped with an element M (e.g., Li) when producing a composite material (before the first charging). That is, in the general formula (1), it is preferable that $0 < a \leq 4$ is satisfied. The value "a" in the general formula (1) is more preferably 0.1 or more, further more preferably 1 or more. The value "a" in the general formula (1) may be 2 or less in that, when M is Li, the dissolution of the amorphous material phase into water can be easily suppressed.

In the general formula (1), the range of z representing the atomic ratio of C to Si may be $0.1 \leq z \leq 6$, may be $0.5 \leq z \leq 4$, and may be $0.5 \leq z \leq 3$. When the amount of carbon contained in the amorphous material phase is controlled within the above range, Si-O-Li bonds are hardly formed, the irreversible capacity of the composite material is reduced, and the amorphous material phase itself has a capacity, which is advantageous also for achieving high capacity. In the general formula (1), M is preferably Li.

Analysis of the composition of the amorphous material phase (quantitative determination of each element in the composite material) can be performed by scanning electron microscope (SEM)-energy dispersive X-ray (EDX) analysis. In the SEM-EDX analysis, a cross section of the composite material is observed using an SEM, and an elemental mapping analysis is performed by EDX. The observation magnification is preferably 2,000 to 20,000 times. The mapping analysis is desirably performed on a region 1 μm or more inward from the peripheral edge of the cross section of the particle of the composite material. In the mapping analysis, the content ratio of elements (i.e., composition) can be calculated using an image analysis software. The composition may be determined by performing the same measurement on randomly selected 10 composite particles, and averaging the measured values. The maximum diameter of a particle to be measured is desirably 5 μm or more. The cross section of the particle of the composite material may be formed, for example, by packing the composite material into a thermosetting resin, followed by curing, which is then processed using a cross-section polisher (CP), or by disassembling the battery to take out the negative electrode, immersing the negative electrode in a thermosetting resin, followed by curing, which is then processed to obtain a cross section of the negative electrode.

Desirable cross-sectional SEM-EDX analysis measurement conditions are shown below.

Processing apparatus: IB-19520CCP (cross-section polisher) available from JEOL Ltd.

Processing conditions: accelerating voltage 6 kV
Current value: 150 to 180 μA
Degree of vacuum: $5\times10^{-4}$ to $2\times10^{-3}$ Pa
Measuring apparatus: JSM-7900F available from JEOL Ltd. (field emission scanning electron microscope), Ultim Extreme available from Oxford Instruments PLC (EDX detector)
Acceleration voltage during analysis: 3 kV

In the C1s spectrum obtained by X-ray photoelectron spectroscopy (XPS) of the composite material, C1s peaks of several species contained in the amorphous material phase are observed. For example, C1s peaks attributable to the Si-C bond, Si-O-C bond, C-O bond, C-C bond, and the like are observed. The presence of such peaks indicates that the amorphous material phase contains a considerable amount of region other than oxides. In particular, the C1s peak attributed to the C-C bond is a peak characteristic of the composite material according to the present disclosure, and indicates that the amorphous material phase includes a region constituted of carbon. The peak derived from the C-C bond is observed, for example, at around 284.8 eV.
Here, the ratio of a peak area Sx derived from the C-C bond to a total area St of all C1s peaks is, for example, 2% or more, may be 3% or more, and may be 5% or more. The ratio of Sx to St is, for example, 90% or less, may be 70% or less, and may be 20% or less. The ratio of Sx to St may be 2% or more and 90% or less, and may be 2% or more and 20% or less.
The ratio of the sum of a peak area Sy derived from the C-Si bond and a peak area Sz derived from the C-O-Si bond to the total area St may be 50% or more, may be 60% or more, and may be 70% or more.
In the XPS of a composite material, a powder of the composite material is used as a sample, and analysis is performed from the sample surface along the depth direction of the composite material (10 to 100 nm), to analyze the internal state of the composite material.
Desirable XPS measurement conditions are shown below.

Measuring apparatus: PHI5000, available from ULVAC-PHI, Inc.
X-ray used: Monochrome Al-Kα, 25 W, 15 kV
Degree of vacuum: $5\times10^{-7}$ Pa

In 13C NMR measurement of the composite material, a peak derived from the C-C bond characteristic of the composite material according to the present disclosure is also observed. A peak area Sv of 9 ppm or more and 30 ppm or less of the spectrum obtained in the 13C NMR measurement of the composite material can be, for example, 10% or more and 90% or less of the area of the whole spectrum.
Desirable 13C NMR measurement conditions are shown below.

Measurement apparatus: JNM-ECZ-600
Magnetic field strength: 14.1 T
MAS-rotational frequency: 15 kHz

(Silicate phase)

The silicate phase contains at least one element M selected from the group consisting of Li, Na, K, Mg, Ca, B and Al. In particular, the silicate phase preferably contains at least Li as the element M. When the element M contained in the silicate phase is an element other than Li, it may occur that, during charging and discharging of a lithium-ion secondary battery including a negative electrode containing the composite material, the element other than Li is replaced with Li, and Li ions are irreversibly captured in the silicate phase, which may cause the capacity to decrease. When the element M contains Li, the above capacity decrease is unlikely to occur.
The silicate phase is constituted of, for example, the element M, Si and O. In view of the reduction of irreversible capacity and the chemical stability, the silicate phase may contain at least one selected from the group consisting of $Li_4SiO_4$, $Li_2SiO_3$, and $Li_2Si_2O_5$. In particular, in view of reducing the irreversible capacity of the silicate phase and suppressing the elution of the amorphous material phase into water, the silicate phase preferably contains $Li_2Si_2O_5$.
When the silicate phase is particulate, the average particle diameter of the silicate phase may be 10 nm or more and 100 μm or less, and may be 100 nm or more and 10 μm or less. Particulate means a state in which the silicate phase (or island portions) is in the form of particles. The shape of the particle is not particularly limited, but a ratio A/B of a maximum diameter A of the particle to a maximum width B in the direction perpendicular to the maximum diameter may be, for example, 1 or more and 20 or less, may be 1 or more and 10 or less, may be 1 or more and 5 or less, and may be 1 or more and 3 or less. The A/B may be calculated as an average value of randomly selected 10 silicate phases (or island portions) in the form of particles. The smaller the average particle diameter of the silicate phase is, the more advantageous it is in terms of alleviating the stress of expansion and contraction during charging and discharging.

The average particle diameter of the silicate phase is measured using a cross-sectional SEM image of the composite material. The average particle diameter of the silicate phase is determined by averaging the maximum diameters of randomly selected 100 silicate phases.

The composite material may have a void inside the amorphous material phase. In this case, the silicate phase may be exposed on the inner wall of the void. The presence of the void can help alleviate the stress associated with expansion and contraction of the active phase. Depending on the kind of the compound containing an element M used in the first step of a later-described method for producing a negative electrode material, a void is likely to be formed near the silicate phase, and the void is likely to be formed such that the silicate phase is exposed on the inner wall. The exposure of the active phase at the inner wall of the void can be reduced by the amount that the silicate phase is exposed on the inner wall of the void. In the case of a void that is not entirely contained in the composite material (communicates with outside of the composite material), the exposure of the active phase that may come into contact with the electrolyte solution can be reduced.

Here, FIG. 1 is a cross-sectional SEM image (backscattered electron image) of an example of a composite material included in a negative electrode material according to one embodiment of the present disclosure.

FIG. 1 shows a cross section of a composite particle included in a later-described negative electrode material A1 of Example 1. In FIG. 1, the portions indicated by reference signs a, b, and c are respectively the amorphous material phase, the silicate phase, and the void. The silicate phase b is exposed on the inner wall of the void c. Although the composite particle shown in FIG. 1 includes no active phase, the composite particle may further include an active phase dispersed in the amorphous material phase.

The composition of the silicate phase can be determined by the above-mentioned SEM-EDX analysis. The silicate phase has a relatively high crystallinity. The composition of the silicate phase therefore may be confirmed by an X-ray diffraction (XRD) method.

(Active Phase)

The active phase is constituted of a material that can reversibly react electrochemically with Li during charging and discharging. The material constituting the active phase includes, for example, at least one selected from the group consisting of a metal and an intermetallic compound. The material constituting the active phase may be a silicon compound, such silicon carbide, or a composite oxide, such as a lithium-titanium composite oxide. The active phase may be used singly or in combination of two or more kinds.

When a metal is used as the material constituting the active phase, the metal may be at least one selected from the group consisting of Si, Sn, Ti, Al, and Mg. In particular, Si and Sn have high capacity, and Si is especially preferred because of its inexpensive price.

When an intermetallic compound is used as the material constituting the active phase, the intermetallic compound may be at least one selected from the group consisting of $CrSi_2$, $MnSi_2$, $FeSi_2$, $CoSi_2$, $NiSi_2$, LiNiSn, and $M_xSi$, where M is at least one selected from the group consisting of Li, Na, K, Mg, Ca, B, and Al, and satisfies $0 < x < 5$.

The above intermetallic compound may contain an element M derived from a compound containing an element M used in the preparation of a composite material. The element M derived from the compound containing an element M may be doped into the active phase during the preparation process of the composite material. When the material constituting the active phase contains Si, the aforementioned $M_xSi$ can be formed as the intermetallic compound.

The content rate of the active phase in the composite material can be controlled as appropriate. In view of achieving high capacity, it is desirable that the content rate of the active phase in the composite material is as high as possible. On the other hand, in view of alleviating the stress associated with expansion and contraction of the active phase and suppressing the side reaction between the active phase and the electrolyte solution, it is necessary that the composite material contains a certain amount of amorphous material phase. The content rate of the active phase in the composite material is, for example, 20 mass% or more and 95 mass% or less, and may be 35 mass% or more and 75 mass% or less.

When the active phase is silicon, the Si phase content in the composite material can be measured by Si-NMR.

When the active phase is particulate, the average particle diameter of the active phase may be 1 nm or more and 1000 nm or less. Particulate means a state in which the active phase (or island portions) is in the form of particles. The shape of the particle is not particularly limited, but a ratio A/B of a maximum diameter A of the particle to a maximum width B in the direction perpendicular to the maximum diameter may be, for example, 1 or more and 20 or less, may be 1 or more and 10 or less, may be 1 or more and 5 or less, and may be 1 or more and 3 or less. The A/B may be calculated as an average value of randomly selected 10 active phases (or island portions) in the form of particles. The smaller the average particle diameter of the active phase is, the more likely the stress associated with expansion and contraction of the active phase is to be alleviated, and the more likely the deterioration due to cracking in the active phase itself is to be suppressed. On the other hand, the larger the average particle diameter of the active phase is, the more likely the side reaction between the active phase and the electrolyte solution is to be suppressed. The average particle diameter of the active phase may be 200 nm or less, may be 100 nm or less, and may be 50 nm or less.

The average particle diameter of the active phase is measured using a cross-sectional SEM image of the composite material. The average particle diameter of the active phase is determined by averaging the maximum diameters of randomly selected 100 active phases.

(Carbon material)

The negative electrode material may contain, in addition to the composite material, at least one carbon material selected from the group consisting of graphite (natural graphite, artificial graphite), hard carbon, and soft carbon. The carbon material may be formed into a composite with an amorphous material phase. For example, a silicate phase (or a silicate phase and an active phase) may be dispersed in a composite material of a carbon material and an amorphous material phase.

The degree of expansion and contraction during charging and discharging of the carbon material is small, as compared to that of the active phase, and therefore, by using the carbon material in combination with the composite material, the battery cycle characteristics can be easily improved. The ratio of the carbon material to the total of the composite material and the carbon material is, for example, 70 mass% or more and 99 mass% or less, may be 85 mass% or more and 95 mass% or less, and may be 90 mass% or more and 95 mass% or less. In this case, high capacity and more favorable cycle characteristics are both likely to be achieved.

(Conductive layer)

In view of improving the conductivity, the negative electrode material may have a conductive layer covering the surface of the composite material. The conductive layer may contain a carbon material having conductivity. The thickness of the conductive layer is preferably thin enough not to substantially affect the average particle diameter of the composite particles. The thickness of the conductive layer is, for example, 1 nm or more and 10 nm or less.

The conductive layer is formed by mixing a raw material of the conductive carbon material with the composite material, and firing the mixture, to carbonize the raw material of the conductive carbon material. As the raw material of the conductive material, for example, coal pitch or coal tar pitch, petroleum pitch, phenolic resin, and the like may be used. The firing of the mixture of the raw material of the conductive carbon material and the composite material is performed, for example, in an inert atmosphere (e.g., atmosphere of argon, nitrogen, etc.). The firing temperature is, for example, 450 °C or higher and 1000 °C or lower. The firing time is, for example, 1 hour or more and 10 hours or less.

FIG. 2 is a schematic sectional view of an example of a negative electrode material according to one embodiment of the present disclosure.

A negative electrode material 20 includes a composite particle 21 and a conductive layer 25 covering the surface of the composite particle 21. The composite particle 21 includes an amorphous material phase 22, an active phase 23, and a silicate phase 24. The composite particle 21 has a sea-island structure in which the active phase 23 and the silicate phase 24 are dispersed in a matrix of the amorphous material phase 22. As illustrated in FIG. 2, a void 26 may be formed in the amorphous material phase 22. The silicate phase 24 may be exposed on the inner wall of the void 26.

[Method for producing negative electrode material for secondary batteries]

A method for producing a negative electrode material for secondary batteries including a composite material in which a silicate phase and an active phase are dispersed in an amorphous material phase includes, for example, the following first and second steps.

(i) First step

The first step is a step of obtaining a raw material mixture containing a first polymer, a material constituting an active phase that reacts with Li, and a compound containing an element M.

(First polymer)

The first polymer is a raw material of an amorphous material phase containing Si, O, and C, and contains Si, O, and C. Part of the first polymer (Si, O) is used, together with a compound containing an element M, for forming a silicate phase. The first polymer may be an organosilicon polymer.

The organosilicon polymer that can be used is one used as a ceramic precursor polymer. The ceramic precursor polymer can be formed into ceramic by controlling the firing conditions. Many organosilicon polymers have thermoplastic properties and become liquid when heated in the subsequent second step. The organosilicon polymer may be a polymer that is liquid at room temperature (25 °C to 35 °C). By using a first polymer that is liquid at room temperature or when heated,

an amorphous material phase which is substantially free of grain boundaries can be produced, and a composite material whose particles have high fracture strength can be obtained.

Organosilicon polymers are, in general, soluble in organic solvents and easy to handle. In the first step, in order to obtain a homogeneous raw material mixture, the organosilicon polymer may be used in a mixed state with an organic solvent. Most of the organic solvent volatilizes during firing in the second step. When the organosilicon polymer is solid at room temperature, the organosilicon polymer may be used by dissolving it in an organic solvent. In view of easily obtaining a homogeneous paste-like raw material mixture, the organosilicon polymer (or a mixture of the organosilicon polymer and an organic solvent) that is liquid at room temperature has a kinetic viscosity at 25 °C of, for example, 0.1 $mm^2/s$ or more and 500 $mm^2/s$ or less.

The first polymer may be, for example, a polysiloxane, a polycarbosilane, a polysilazane, a polyorganoborosilazane, a polymetalloxane, a polyborosiloxane, a polycarbosilazane, and the like. These may be used singly or in combination of two or more kinds. For example, at least one selected from the group consisting of a polysiloxane, a polycarbosilane, and a polysilazane may be used.

The polysiloxane is a polymer compound whose backbone is a Si-O bond. The polycarbosilane is a polymer compound whose backbone is a Si-C bond. The polysilazane is a polymer compound whose backbone is a Si-N bond. The molecules of these polymer compounds may be straight-chain, branched, or three-dimensionally networked. Examples of the polysiloxane include silicone resins and silicone oils. As the silicone resin, for example, trade name "KR-112" available from Shin-Etsu Chemical Co., Ltd., and the like can be used.

The polysiloxane has a repeating unit represented by, for example, a formula (2):

[Chem. 1]

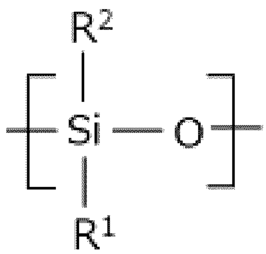

The polycarbosilane has a repeating unit represented by, for example, a formula (3):

[Chem. 2]

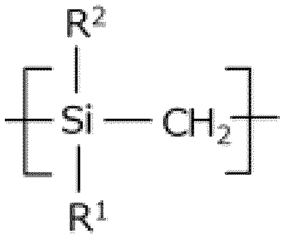

The polysilazane has a repeating unit represented by, for example, a formula (4):

[Chem. 3]

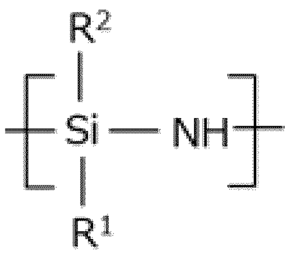

These first polymers can generate an amorphous material phase represented by the general formula (1).

In the formulas (2) to (4), $R^1$ and $R^2$ are each independently, for example, a hydrogen atom or an organic group having 1 to 8 carbon atoms. The organic group encompasses a hydrocarbon group having a substituent (or functional group) and a hydrocarbon group having no substituent (or functional group). The functional group can be a hydroxyl group, a cyano group, an amino group, and the like, but is not limited thereto. The hydrocarbon group may be, for example, an alkyl group, a vinyl group, an alkoxy group, an aryl group, an aryloxy group, a ketone group, a carboxyl group, an ester group, and the like. A plurality of the repeating units of the first polymer may have the same structure or different structures. That is, in the plurality of the repeating units of the first polymer, $R^1$s may be the same or different, and $R^2$s may be the same or different.

Examples of the alkyl group include methyl, ethyl, propyl, isopropyl, butyl, t-butyl, pentyl, and hexyl groups. Examples of the aryl group include phenyl, benzyl, and toluyl groups. Examples of the aryloxy group include phenoxy group. Examples of the alkoxy group includes an oxyalkyl group having 1 to 8 carbon atoms. Examples of the ester group include a condensation group of an alcohol having 1 to 8 carbon atoms and a carboxylic acid having 1 to 8 carbon atoms. For example, $R^1$ and $R^2$ can be each independently a phenyl group, a methyl group, an ethyl group, or the like.

The weight average molecular weight (Mw) of the first polymer may be, for example, 1,000 or more and 100,000 or less, may be 1,000 or more and 10,000 or less, and 2,000 or more and 10,000 or less.

(Material constituting active phase)

As the material constituting the active phase, particles of an aforementioned material (hereinafter sometimes referred to as "active particles") can be used. The active particles may be nanoparticles. The average particle diameter of the active particles may be 1 nm or more and 1000 nm or less, 200 nm or less, 100 nm or less, or 50 nm or less. As the active particles, for example, silicon nanoparticles may be used.

The average particle diameter of the active particles is measured using a cross-sectional SEM image of the composite material. The average particle diameter of the active particles is obtained by averaging the maximum diameters of randomly selected 100 active particles.

In the raw material mixture, the amount of the material constituting the active phase relative to 100 parts by mass of the first polymer may be set as appropriate according to the desired ratio of the active phase in the composite material, and may be, for example, 20 parts by mass or more and 250 parts by mass or less, and may be 50 parts by mass or more and 200 parts by mass or less.

(Compound containing element M)

The element M is at least one selected from the group consisting of Li, Na, K, Mg, Ca, B, and Al. The compound containing an element M contains at least Li as the element M. In this case, in the second step, a composite material can be produced in which the amorphous material phase and the silicate phase each contain at least Li as the element M.

The compound containing an element M contributes to the formation of a silicate phase containing the element M and the doping of the element M into the amorphous material phase. In the second step, a silicate phase containing an element M is formed, with particles of the compound containing the element M as the nucleus. The Si in the silicate phase is supplied from the first polymer surrounding the particles of the compound containing an element M. Anion species (e.g., O) in the silicate phase are supplied from the compound containing an element M and/or the first polymer. Part of the element M is also supplied into an amorphous material phase formed by firing.

As the compound containing an element M, for example, a salt formed from an anion of carbonic acid or carboxylic acid (formic acid, acetic acid, benzoic acid, etc.) and a cation of the element M may be used. Examples of the compound containing an element M include at least one selected from the group consisting of lithium carbonate, lithium formate, lithium acetate, and lithium benzoate.

In particular, the compound containing an element M is preferably lithium carbonate. In the case of lithium carbonate, $CO_2$ gas is generated along with the decomposition of lithium carbonate during the firing in the second step, which causes a void to be formed in the amorphous material phase. Also, since the silicate phase is formed, with particles of lithium carbonate as the nucleus, a void tends to be formed near the silicate phase. The void is likely to be formed so that the silicate phase is exposed on the inner wall.

The compound containing an element M may be used as a powder (particles). The maximum diameter of the particles of the compound containing an element M is, for example, in a range of 0.01 μm or more and 100 μm or less.

In the raw material mixture, the blending ratio between the first polymer and the compound containing an element M may be adjusted as appropriate according to the proportion of the silicate phase to be dispersed in the amorphous material phase. In the raw material mixture, a molar ratio M/Si of the element M derived from the compound containing an element M to the Si derived from the first polymer may be 0.01 or more and 5 or less, and may be 0.1 or more and 2 or less.

(ii) Second step

The second step is a step of firing the raw material mixture, to produce a composite material. The composite material includes an amorphous material phase, an active phase, and a silicate phase. The active phase and the silicate phase are each dispersed in the amorphous material phase. The amorphous material phase contains Si, O, and C. The silicate phase and the amorphous material phase each independently contain an element M.

The raw material mixture including the first polymer, the material constituting an active phase, and the compound containing an element M is in a paste (or slurry) state having fluidity at room temperature, or passes through a state having fluidity at least when heated for firing. As a result, during firing in the second step, most of the surfaces of the material constituting an active phase and the compound containing an element M are covered with the first polymer having fluidity. Using a raw material mixture in such a state is desirable for obtaining a dense composite material in the second step.

By including a compound containing an element M in the raw material mixture, a silicate phase containing the element M can be formed, and the element M can be doped into the amorphous material phase. This can provide a composite material having a small irreversible capacity.

The firing of the raw material mixture can be performed, for example, at 600 °C or higher and 1000 °C or lower in an inert atmosphere. The inert atmosphere may be a reduced pressure atmosphere or may be in the flow of an inert gas. The inert gas may be argon, nitrogen, helium, and the like. The firing time may be any length of time that allows the carbon atoms contained in the first polymer to be sufficiently carbonized. The composite material obtained after firing is a solid with no fluidity. Pulverizing the composite material provides a powdered composite material.

In the step of obtaining a raw material mixture, a second polymer that is carbonized together with the carbon atoms in the first polymer when firing the raw material mixture may be included in the raw material mixture. The second polymer may be included in the mixture as at least one raw material selected from the group consisting of graphite (natural graphite, artificial graphite), hard carbon, and soft carbon.

The second polymer is not limited to a particular one, and is preferably a material excellent in miscibility with the first polymer. The second polymer may be, for example, at least one selected from the group consisting of a polyvinyl resin, a polyimide resin, a polyacrylonitrile, an acrylic resin, and a polyolefin resin.

[Secondary battery]

A secondary battery according to an embodiment of the present disclosure includes a positive electrode, a negative electrode, and an electrolyte. The negative electrode includes the above-described negative electrode material for secondary batteries.

(Negative electrode)

The negative electrode includes, for example, a sheet-like negative electrode current collector, and a negative electrode mixture layer formed on the negative electrode current collector. The negative electrode mixture layer is a negative electrode mixture formed in a layer or an applied film. The negative electrode mixture includes a negative electrode active material as an essential component, and may include a binder, a conductive agent, a thickener, and the like, as optional components. The negative electrode active material includes the negative electrode material for secondary batteries.

The negative electrode mixture layer can be formed by, for example, applying a negative electrode slurry of a negative electrode mixture dispersed in a dispersion medium, onto a surface of the negative electrode current collector, followed by drying. The applied film after drying may be rolled as necessary.

As the negative electrode current collector, a non-porous conductive substrate (metal foil, etc.) or a porous conductive substrate (mesh, net, punched sheet, etc.) is used. Examples of the material of the negative electrode current collector include stainless steel, nickel, nickel alloy, copper, and copper alloy.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; polyethersulfone; and rubbery materials, such as styrene-butadiene copolymer rubber (SBR). The binder may be used singly or in combination of two or more kinds.

Examples of the conductive agent include carbon black, such as acetylene black, carbon nanotubes (hereinafter sometimes referred to as CNTs), metal fibers, fluorinated carbon, metal powder, conductive whiskers, such as zinc oxide and potassium titanate, conductive metal oxides, such as titanium oxide, and organic conductive materials, such as phenylene derivatives. These may be used singly or in combination of two or more kinds.

(Positive Electrode)

The positive electrode includes a positive electrode active material capable of electrochemically absorbing and releasing lithium ions. The positive electrode includes, for example, a positive electrode current collector, and a positive electrode mixture layer formed on a surface of the positive electrode current collector. The positive electrode mixture layer can be formed by applying a positive electrode slurry of a positive electrode mixture dispersed in a dispersion medium, onto a surface of the positive electrode current collector, followed by drying. The applied film after drying may be rolled as necessary. The positive electrode mixture includes a positive electrode active material as an essential component, and may include a binder, a conductive agent, and the like, as optional components.

As the positive electrode active material, for example, a lithium-containing composite oxide can be used. Examples thereof include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMPO_4$, and $Li_2MPO_4F$, where M is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value "a" representing the molar ratio of lithium increases and decreases during charging and discharging.

As the binder and the conductive agent, those as exemplified for the negative electrode can be used. As the conductive agent, graphite, such as natural graphite and artificial graphite, may also be used.

The shape and the thickness of the positive electrode current collector can be respectively selected from the shapes and the ranges corresponding to those of the negative electrode current collector. Examples of the material of the positive electrode current collector include stainless steel, aluminum, aluminum alloy, and titanium.

(Electrolyte)

The electrolyte has lithium ion conductivity. The electrolyte may be a liquid electrolyte (electrolyte solution) or a solid electrolyte.

As the solid electrolyte, for example, a solid or gel polymer electrolyte, an inorganic solid electrolyte, or the like can be used. As the inorganic solid electrolyte, for example, a known material for use in all-solid lithium-ion secondary batteries and the like (e.g., oxide-based solid electrolyte, sulfide-based solid electrolyte, halide-based solid electrolyte) can be used. The polymer electrolyte includes, for example, a lithium salt and a matrix polymer, or a nonaqueous solvent, a lithium salt, and a matrix polymer. The matrix polymer may be, for example, a polymer material that absorbs a nonaqueous solvent and turns into a gel. Examples of the polymer material include fluorocarbon resins, acrylic resins, and polyether resins.

The electrolyte solution contains a solvent and an electrolyte salt. The solvent may be a nonaqueous solvent, and may be water. In the case of a lithium-ion secondary battery, the electrolyte salt includes at least a lithium salt.

The concentration of the lithium salt in the electrolyte solution is, for example, 0.5 mol/L or more and 2 mol/L or less. By setting the lithium salt concentration within the above range, it is possible to obtain an electrolyte solution having excellent ion conductivity and moderate viscosity. The lithium salt concentration, however, is not limited to the above.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL), and $\gamma$-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, borates, and imide salts. The lithium salt may be used singly, or in combination of two or more kinds.

The electrolyte solution may further contain an additive. Examples of the additive include vinylene carbonate (VC), fluoroethylene carbonate (FEC), and vinyl ethyl carbonate (VEC).

(Separator)

Usually, it is desirable to interpose a separator between the positive electrode and the negative electrode. The separator has ion permeability and has electrically insulating properties. As the separator, a microporous thin film, a woven fabric, a nonwoven fabric, and the like can be used. As the material of the separator, a polyolefin, such as polypropylene and polyethylene, is preferred.

One example of the structure of the secondary battery is a structure in which an electrode group formed by winding the positive electrode and the negative electrode with the separator interposed therebetween is housed in an outer body, together with the electrolyte solution. A stacked electrode group in which the positive electrode and the negative

electrode stacked together, with a separator interposed therebetween may be adopted. The secondary battery may be in any form, such as cylindrical type, prismatic type, coin type, button type, and laminate type.

An example of the secondary battery according to the present disclosure will be described below with reference to FIG. 3.

The battery includes a bottomed prismatic battery case 4, an electrode group 1 and an electrolyte solution (not shown) housed in the battery case 4. The electrode group 1 includes a belt-shaped negative electrode, a belt-shaped positive electrode, and a separator interposed therebetween. The negative electrode current collector of the negative electrode is electrically connected, via a negative electrode lead 3, to a negative electrode terminal 6 provided at a sealing plate 5. The negative electrode terminal 6 is insulated from the sealing plate 5 by a resin gasket 7. The positive electrode current collector of the positive electrode is electrically connected, via a positive electrode lead 2, to the back side of the sealing plate 5. That is, the positive electrode is electrically connected to the battery case 4 serving as a positive electrode terminal. The periphery of the sealing plate 5 is engaged into the open end of the battery case 4, and the engaged portion is laser welded. The sealing plate 5 has an electrolyte solution injection port, which is closed with a sealing plug 8 after the injection.

<<Supplementary notes>>

The above description of embodiments discloses the following techniques.

(Technique 1)

A negative electrode material for secondary batteries, comprising

a composite material including an amorphous material phase and a silicate phase, wherein
the silicate phase is dispersed in the amorphous material phase,
the amorphous material phase contains Si, O, and C,
the silicate phase contains an element M, and
the element M is at least one selected from the group consisting of Li, Na, K, Mg, Ca, B, and Al.

(Technique 2)

The negative electrode material for secondary batteries according to technique 1, wherein in a cross section of the composite material, the amorphous material phase is substantially free of grain boundaries.

(Technique 3)

The negative electrode material for secondary batteries according to technique 1 or 2, wherein the silicate phase and the amorphous material phase each independently contain the element M.

(Technique 4)

The negative electrode material for secondary batteries according to technique 3, wherein the amorphous material phase contains at least Li as the element M.

(Technique 5)

The negative electrode material for secondary batteries according to any one of techniques 1 to 4, wherein the silicate phase contains at least Li as the element M.

(Technique 6)

The negative electrode material for secondary batteries according to any one of techniques 1 to 4, wherein the silicate phase includes at least one selected from the group consisting of $Li_4SiO_4$, $Li_2SiO_3$, and $Li_2Si_2O_5$.

(Technique 7)

The negative electrode material for secondary batteries according to any one of techniques 1 to 6, wherein

the silicate phase is particulate, and
an average particle diameter of the silicate phase is 10 nm or more and 100 μm or less.

(Technique 8)

The negative electrode material for secondary batteries according to technique 3, wherein the amorphous material phase is represented by a general formula: $M_aSiO_xN_yC_z$, and satisfies
$0 < a \leq 4$,
$0.1 \leq x \leq 2.5$,
$0 \leq y \leq 0.5$, and
$0 < 1\text{-}0.5x\text{-}0.75y < z \leq 6$.

(Technique 9)

The negative electrode material for secondary batteries according to technique 8, wherein M in the general formula includes at least Li.

(Technique 10)

The negative electrode material for secondary batteries according to any one of techniques 1 to 9, wherein

the composite material has a void inside the amorphous material phase, and
the silicate phase is exposed on an inner wall of the void.

(Technique 11)

The negative electrode material for secondary batteries according to any one of techniques 1 to 10, further comprising

a conductive layer covering a surface of the composite material, wherein
the conductive layer contains a carbon material having conductivity.

(Technique 12)

The negative electrode material for secondary batteries according to any one of techniques 1 to 11, wherein

the composite material further includes an active phase that reacts with Li, and
the active phase is dispersed in the amorphous material phase.

(Technique 13)

The negative electrode material for secondary batteries according to technique 12, wherein a material constituting the active phase includes at least one selected from the group consisting of a metal and an intermetallic compound.

(Technique 14)

The negative electrode material for secondary batteries according to technique 13, wherein

the metal is at least one selected from the group consisting of Si, Sn, Ti, Al, and Mg, and
the intermetallic compound is at least one selected from the group consisting of $CrSi_2$, $MnSi_2$, $FeSi_2$, $CoSi_2$, $NiSi_2$, LiNiSn, and $M_xSi$, where M is at least one selected from the group consisting of Li, Na, K, Mg, Ca, B, and Al, and satisfies $0 < x < 5$.

(Technique 15)

The negative electrode material for secondary batteries according to any one of techniques 12 to 14, wherein a content rate of the active phase in the composite material is 20 mass% or more and 95 mass% or less.

(Technique 16)

The negative electrode material for secondary batteries according to any one of techniques 12 to 15, wherein

the active phase is particulate, and
an average particle diameter of the active phase is 1 nm or more and 1000 nm or less.

(Technique 17)

The negative electrode material for secondary batteries according to any one of techniques 1 to 16, further comprising at least one selected from the group consisting of graphite, hard carbon, and soft carbon.

(Technique 18)

A secondary battery, comprising

a positive electrode, a negative electrode, and an electrolyte, wherein
the negative electrode includes the negative electrode material for secondary batteries according to any one of techniques 1 to 17.

(Technique 19)

A method for producing a negative electrode material for secondary batteries, the method comprising steps of:

obtaining a raw material mixture containing a first polymer which is an organosilicon polymer containing Si, O, and C, a material constituting an active phase that reacts with Li, and a compound containing an element M; and
firing the raw material mixture, to produce a composite material, wherein
the composite material includes an amorphous material phase, the active phase, and a silicate phase,
the active phase and the silicate phase are each dispersed in the amorphous material phase,
the amorphous material phase contains Si, O, and C,
the silicate phase and the amorphous material phase each independently contain the element M, and
the element M is at least one selected from the group consisting of Li, Na, K, Mg, Ca, B, and Al.

(Technique 20)

The method for producing a negative electrode material for secondary batteries according to technique 19, wherein the silicate phase and the amorphous material phase each contain at least Li as the element M.

(Technique 21)

The method for producing a negative electrode material for secondary batteries according to technique 19 or 20, wherein the compound containing the element M is at least one selected from the group consisting of lithium carbonate, lithium formate, lithium acetate, and lithium benzoate.

(Technique 22)

The method for producing a negative electrode material for secondary batteries according to any one of techniques 19 to 21, wherein the first polymer is at least one selected from the group consisting of a polysiloxane, a polycarbosilane, and a polysilazane.

(Technique 23)

The method for producing a negative electrode material for secondary batteries according to any one of techniques 19 to 22, wherein in the step of obtaining a raw material mixture, a second polymer that is carbonized together with carbon atoms in the first polymer when firing the raw material mixture is included in the raw material mixture.

(Technique 24)

The method for producing a negative electrode material for secondary batteries according to technique 23, wherein the second polymer is at least one selected from the group consisting of a polyvinyl resin, a polyimide resin, a polyacrylonitrile, an acrylic resin, and a polyolefin resin.

[Examples]

The present disclosure will be specifically described below by way of Examples and Comparative Examples. The present disclosure, however, is not limited to the following Examples.

<<Example 1>>

A silicone resin (solvent-containing type) was used as the organosilicon polymer. Specifically, trade name "KR-112" (containing organic solvent (toluene, xylene), nonvolatile content (105 °C × 3 h): 70%, kinetic viscosity (25 °C): 200 $mm^2/s$) available from Shin-Etsu Chemical Co., Ltd. was used.

Lithium carbonate ($Li_2CO_3$) powder (maximum particle diameter was 1 μm or more and less than 100 μm) was used as the compound containing Li.

The lithium carbonate powder was added to "KR-112", and mixed together, to obtain a homogeneous paste-like raw material mixture. The mixing was performed in an air atmosphere at room temperature, by stirring at 20,000 rpm for 3 minutes using a thin-film spin system high-speed mixer "FILMIX" available from PRIMIX Corporation. The amount of lithium carbonate added was adjusted so that the molar ratio of Li derived from lithium carbonate to Si derived from silicone resin: Li/Si = 1.

The raw material mixture was transferred into an alumina crucible, and fired in a nitrogen atmosphere at 875 °C for 5 hours. The fired product was pulverized using a mortar, and passed through a sieve with 75 μm mesh size, to obtain composite particles (negative electrode material A1).

The negative electrode material A1 (composite particles) was subjected to SEM-EDX analysis. As a result, an amorphous material phase, and a silicate phase dispersed in the amorphous material phase were confirmed in the cross-sectional SEM image of the composite particles. The composite particles had a void inside the amorphous material phase, and the silicate phase was exposed on the inner wall of the void. The amorphous material phase contained Li, Si, O, and C. The composition of the silicate phase was mainly $Li_2SiO_3$.

<<Example 2>>

A composite material (negative electrode material A2) was obtained in the same manner as in Example 1, except that the amount of lithium carbonate added was adjusted so that the molar ratio of Li derived from lithium carbonate to Si derived from silicone resin: Li/Si = 0.5.

<<Comparative Example 1>>

Composite particles (negative electrode material B1) were obtained in the same manner as in Example 1, except that no lithium carbonate was added to "KR-112" (firing was performed using "KR-112" only).

The negative electrode material B1 (composite particles) was subjected to SEM-EDX analysis. In the cross-sectional SEM image of the composite particles, an amorphous material phase was confirmed, but no silicate phase dispersed in the amorphous material phase was confirmed.

[Evaluation 1]

With respect to the negative electrode materials of Examples 1 to 2 and Comparative Example 1, test cells including the respective negative electrode materials were produced by the following procedure, for each of which the irreversible capacity was determined.

<Production of test cell>

(Production of working electrode (negative electrode))

The negative electrode material, carbon nanotubes (CNTs), polyacrylic acid (PAA), styrene-butadiene copolymer rubber (SBR), carboxymethyl cellulose (CMC), and an appropriate amount of water were mixed together, to prepare

a negative electrode slurry. The amounts of CNTs, PAA, CMC, and SBR added were 0.5 parts by mass, 5 parts by mass, 5 parts by mass, and 5 parts by mass, respectively, relative to 100 parts by mass of the negative electrode material.

The negative electrode slurry was applied to one side of an electrolytic copper foil serving as a current collector, and the foil was punched out into a size of 2 cm × 2 cm, and then dried, to form a negative electrode mixture layer. In this way, a negative electrode was obtained.

(Production of counter electrode)

A lithium metal foil was attached to one side of an electrolytic copper foil (current collector), and punched out into a square shape of each side 2.5 cm, to produce a counter electrode.

(Preparation of electrolyte solution)

A mixed solvent containing ethylene carbonate (EC), ethyl methyl carbonate (EMC), and dimethyl carbonate (DMC) in a volume ratio of EC:EMC:DMC = 4:1:15 was obtained. $LiPF_6$ was dissolved in the mixed solvent at a concentration of 1.3 mol/L, to prepare an electrolyte solution.

(Assembling of test cell)

The negative electrode and the counter electrode were arranged opposite each other, via a separator interposed therebetween, to form an electrode body. The separator used here was a microporous film made of polyolefin. The electrode body was housed in an outer body made of an aluminum laminated sheet, into which the electrolyte solution was injected, and then, the opening of the outer was sealed. At this time, each of the leads attached to the negative electrode and the counter electrode were partially exposed from the outer body. In this way, a test cell was obtained.

<Charge-discharge test>

The test cell was subjected to the following charging and discharging in a 25 °C thermostatic chamber. The rest time between charging and discharging was set to 20 minutes.

(Charging)

A constant-current charging was performed at 0.1C (1C is a current value at which the design capacity is discharged in one hour) until the cell voltage reached 0.005 V. The subsequent rest time was set to 20 minutes. Next, a constant-current charging was performed at 0.01C until the cell voltage reached 0.005 V. The subsequent rest time was set to 20 minutes. This was further followed by a constant-current charging performed at 0.001C until the cell voltage reached 0.005 V.

(Discharging)

A constant-current discharging was performed at 0.1C until the cell voltage reached 1 V. The subsequent rest time was set to 20 minutes. Next, a constant-current discharging was performed at 0.01C until the cell voltage reached 1 V. The subsequent rest time was set to 20 minutes. This was further followed by a constant-current discharging performed at 0.001C until the cell voltage reached 1 V.

From the above charging and discharging, the charge capacity and the discharge capacity each per unit mass of the negative electrode material (composite particles) were determined, and the irreversible capacity was calculated by subtracting the discharge capacity from the charge capacity. The irreversible capacity was expressed as a relative value, with the irreversible capacity of the battery B1 of Comparative Example 1 taken as 100.

The evaluation results are shown in Table 1.

[Table 1]

| negative electrode material | molar ratio Li/Si in raw material mixture | silicate phase dispersed in amorphous material phase | void in amorphous material phase | irreversible capacity (relative value) |
|---|---|---|---|---|
| A1 | 1 | with | with | 43.6 |
| A2 | 0.5 | with | with | 59.4 |

(continued)

| negative electrode material | molar ratio Li/Si in raw material mixture | silicate phase dispersed in amorphous material phase | void in amorphous material phase | irreversible capacity (relative value) |
|---|---|---|---|---|
| B1 | - | without | without | 100 |

With the negative electrode materials A1 and A2, as compared to the negative electrode material B1, the irreversible capacity was significantly reduced.

<<Example 3>>

The same silicone resin (solvent-containing type) as in Example 1 was used as the organosilicon polymer. The same lithium carbonate powder as in Example 1 was used as the compound containing Li.

Silicon nanoparticles (average particle diameter 40 nm) were used as the material constituting an active phase.

The lithium carbonate powder and the silicon nanoparticles were added to "KR-112", and mixed together, to obtain a homogeneous paste-like raw material mixture. The mixing was performed in an air atmosphere at room temperature, by stirring at 20,000 rpm for 3 minutes using a thin-film spin system high-speed mixer "FILMIX" available from PRIMIX Corporation.

The amount of lithium carbonate added was adjusted so that the molar ratio of Li derived from lithium carbonate to Si derived from silicone resin: Li/Si = 1. The amount of silicon nanoparticles added was 11.9 parts by mass relative to 100 parts by mass of "KR-112".

The raw material mixture was transferred into an alumina crucible, and fired in a nitrogen atmosphere at 875 °C for 5 hours. The fired product was pulverized using a mortar, and passed through a sieve with 75 μm mesh size, to obtain composite particles (negative electrode material A3).

The negative electrode material A3 (composite particles) was subjected to SEM-EDX analysis. In the cross-sectional SEM image of the composite particles, an amorphous material phase, and a silicate phase and an active phase each dispersed in the amorphous material phase were confirmed. The amorphous material phase had a void in its inside, and the silicate phase was exposed on the inner wall of the void. The amorphous material phase contained Li, Si, O, and C. The composition of the silicate phase was mainly $Li_2SiO_3$.

<<Example 4>>

The amount of lithium carbonate added was adjusted so that the molar ratio of Li derived from lithium carbonate to Si derived from silicone resin: Li/Si = 0.5. The amount of silicon nanoparticles added was 11.2 parts by mass relative to 100 parts by mass of "KR-112". Except for the above, in the same manner as in Example 3, composite particles (negative electrode material A4) were obtained.

<<Comparative Example 2>>

No lithium carbonate powder was added to "KR-112". The amount of silicon nanoparticles added was 10.3 parts by mass relative to 100 parts by mass of silicone resin. Except for the above, in the same manner as in Example 3, composite particles (negative electrode material B2) were obtained.

The negative electrode material B2 (composite particles) was subjected to SEM-EDX analysis. In the cross-sectional SEM image of the composite particles, an amorphous material phase, and an active phase dispersed in the amorphous material phase were confirmed, but no silicate phase dispersed in the amorphous material phase was confirmed.

[Evaluation 2]

With respect to the negative electrode materials of Examples 3 and 4 and Comparative Example 2, test cells including the respective negative electrode materials were produced and subjected to charging and discharging in the same manner as in [Evaluation 1], for each of which the irreversible capacity was determined. The irreversible capacity was expressed as a relative value, with the irreversible capacity of the battery B2 of Comparative Example 2 taken as 100. Furthermore, the ratio (percentage) of the discharge capacity to the charge capacity was calculated as an initial charge-discharge efficiency.

The evaluation results are shown in Table 2.

[Table 2]

| negative electrode material | molar ratio Li/Si in raw material mixture | silicate phase dispersed in amorphous material phase | active phase dispersed in amorphous material phase | void in amorphous material phase | irreversible capacity (relative value) | initial charge-discharge efficiency (%) |
|---|---|---|---|---|---|---|
| A3 | 1 | with | with | with | 33.8 | 52.5 |
| A4 | 0.5 | with | with | with | 36.8 | 62.0 |
| B2 | - | without | with | without | 100 | 46.8 |

With the negative electrode materials A3 and A4, as compared to the negative electrode material B2, the irreversible capacity was significantly reduced, and the charge-discharge efficiency was improved.

[Industrial Applicability]

The negative electrode for secondary batteries according to the present disclosure is useful for secondary batteries used as a main power source for mobile communication devices, portable electronic devices, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug, 20: negative electrode material, 21: composite particle, 22: amorphous material phase, 23: active phase, 24: silicate phase, 25: conductive layer, 26: void

## Claims

1. A negative electrode material for secondary batteries, comprising

   a composite material including an amorphous material phase and a silicate phase, wherein
   the silicate phase is dispersed in the amorphous material phase,
   the amorphous material phase contains Si, O, and C,
   the silicate phase contains an element M, and
   the element M is at least one selected from the group consisting of Li, Na, K, Mg, Ca, B, and Al.

2. The negative electrode material for secondary batteries according to claim 1, wherein in a cross section of the composite material, the amorphous material phase is substantially free of grain boundaries.

3. The negative electrode material for secondary batteries according to claim 1, wherein the silicate phase and the amorphous material phase each independently contain the element M.

4. The negative electrode material for secondary batteries according to claim 3, wherein the amorphous material phase contains at least Li as the element M.

5. The negative electrode material for secondary batteries according to claim 1, wherein the silicate phase contains at least Li as the element M.

6. The negative electrode material for secondary batteries according to claim 1, wherein the silicate phase includes at least one selected from the group consisting of $Li_4SiO_4$, $Li_2SiO_3$, and $Li_2Si_2O_5$.

7. The negative electrode material for secondary batteries according to claim 1, wherein

the silicate phase is particulate, and
an average particle diameter of the silicate phase is 10 nm or more and 100 μm or less.

**8.** The negative electrode material for secondary batteries according to claim 3, wherein the amorphous material phase is represented by a general formula: $M_aSiO_xN_yC_z$, and satisfies

$$0 < a \leq 4,$$

$$0.1 \leq x \leq 2.5,$$

$$0 \leq y \leq 0.5,$$

and

$$0 < 1\text{-}0.5x\text{-}0.75y < z \leq 6.$$

**9.** The negative electrode material for secondary batteries according to claim 8, wherein M in the general formula includes at least Li.

**10.** The negative electrode material for secondary batteries according to claim 1, wherein

the composite material has a void inside the amorphous material phase, and
the silicate phase is exposed on an inner wall of the void.

**11.** The negative electrode material for secondary batteries according to claim 1, further comprising

a conductive layer covering a surface of the composite material, wherein
the conductive layer contains a carbon material having conductivity.

**12.** The negative electrode material for secondary batteries according to claim 1, wherein

the composite material further includes an active phase that reacts with Li, and
the active phase is dispersed in the amorphous material phase.

**13.** The negative electrode material for secondary batteries according to claim 12, wherein a material constituting the active phase includes at least one selected from the group consisting of a metal and an intermetallic compound.

**14.** The negative electrode material for secondary batteries according to claim 13, wherein

the metal is at least one selected from the group consisting of Si, Sn, Ti, Al, and Mg, and
the intermetallic compound is at least one selected from the group consisting of $CrSi_2$, $MnSi_2$, $FeSi_2$, $CoSi_2$, $NiSi_2$, LiNiSn, and $M_xSi$, where M is at least one selected from the group consisting of Li, Na, K, Mg, Ca, B, and Al, and satisfies $0 < x < 5$.

**15.** The negative electrode material for secondary batteries according to claim 12, wherein
a content rate of the active phase in the composite material is 20 mass% or more and 95 mass% or less.

**16.** The negative electrode material for secondary batteries according to claim 12, wherein

the active phase is particulate, and
an average particle diameter of the active phase is 1 nm or more and 1000 nm or less.

**17.** The negative electrode material for secondary batteries according to claim 1, further comprising at least one selected from the group consisting of graphite, hard carbon, and soft carbon.

**18.** A secondary battery, comprising

a positive electrode, a negative electrode, and an electrolyte, wherein
the negative electrode includes the negative electrode material for secondary batteries according to claim 1.

**19.** A method for producing a negative electrode material for secondary batteries, the method comprising steps of:

obtaining a raw material mixture containing a first polymer which is an organosilicon polymer containing Si, O, and C, a material constituting an active phase that reacts with Li, and a compound containing an element M; and
firing the raw material mixture, to produce a composite material, wherein
the composite material includes an amorphous material phase, the active phase, and a silicate phase,
the active phase and the silicate phase are each dispersed in the amorphous material phase,
the amorphous material phase contains Si, O, and C,
the silicate phase and the amorphous material phase each independently contain the element M, and
the element M is at least one selected from the group consisting of Li, Na, K, Mg, Ca, B, and Al.

**20.** The method for producing a negative electrode material for secondary batteries according to claim 19, wherein the silicate phase and the amorphous material phase each contain at least Li as the element M.

**21.** The method for producing a negative electrode material for secondary batteries according to claim 19, wherein the compound containing the element M is at least one selected from the group consisting of lithium carbonate, lithium formate, lithium acetate, and lithium benzoate.

**22.** The method for producing a negative electrode material for secondary batteries according to claim 19, wherein the first polymer is at least one selected from the group consisting of a polysiloxane, a polycarbosilane, and a polysilazane.

**23.** The method for producing a negative electrode material for secondary batteries according to claim 19, wherein in the step of obtaining a raw material mixture, a second polymer that is carbonized together with carbon atoms in the first polymer when firing the raw material mixture is included in the raw material mixture.

**24.** The method for producing a negative electrode material for secondary batteries according to claim 23, wherein the second polymer is at least one selected from the group consisting of a polyvinyl resin, a polyimide resin, a polyacrylonitrile, an acrylic resin, and a polyolefin resin.

*FIG. 1*

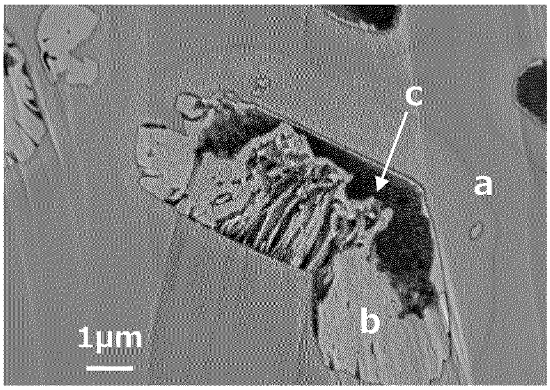

*FIG. 2*

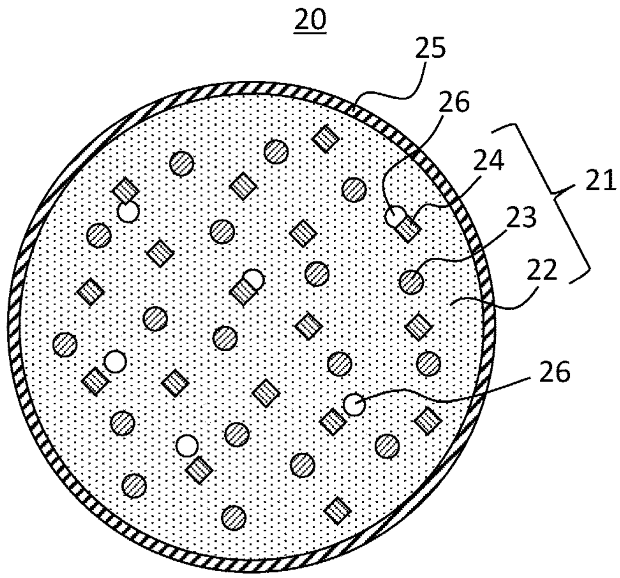

*FIG. 3*

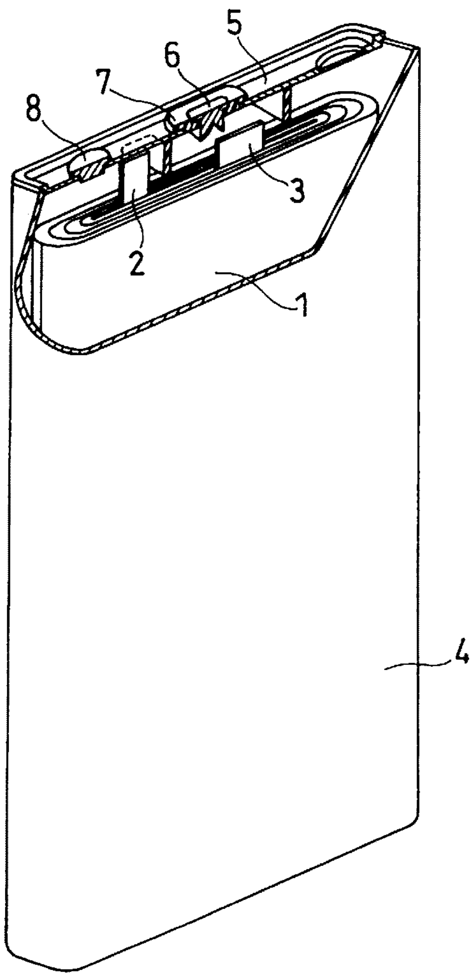

## INTERNATIONAL SEARCH REPORT

International application No.
**PCT/JP2023/022978**

**A. CLASSIFICATION OF SUBJECT MATTER**

***H01M 4/58***(2010.01)i; ***H01M 4/36***(2006.01)i; ***H01M 4/38***(2006.01)i; ***H01M 4/587***(2010.01)i
FI: H01M4/58; H01M4/36 A; H01M4/36 C; H01M4/36 E; H01M4/38 Z; H01M4/587

According to International Patent Classification (IPC) or to both national classification and IPC

**B. FIELDS SEARCHED**

Minimum documentation searched (classification system followed by classification symbols)

H01M4/58; H01M4/36; H01M4/38; H01M4/587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2015-060776 A (TOSHIBA CORPORATION) 30 March 2015 (2015-03-30)<br>paragraphs [0009]-[0010], [0013]-[0014], [0019], [0022], [0024], [0027], [0041], fig. 1-2 | 1-7, 11-18<br>8-10, 19-24 |
| A | JP 2014-220216 A (TEIJIN LIMITED) 20 November 2014 (2014-11-20) | 1-24 |
| A | US 2021/0135209 A1 (NANOGRAF CORPORATION) 06 May 2021 (2021-05-06) | 1-24 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 August 2023** | **12 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/022978**

| Patent document cited in search report | Publication date (day/month/year) | Patent family member(s) | Publication date (day/month/year) |
|---|---|---|---|
| JP 2015-060776 A | 30 March 2015 | US 2015/0086870 A1<br>paragraphs [0019]-[0020], [0024]-[0025], [0029], [0031], [0037], [0039]-[0041], [0053], fig. 1-2<br>EP 2851979 A1<br>CN 104466125 A<br>KR 10-2015-0032778 A | |
| JP 2014-220216 A | 20 November 2014 | (Family: none) | |
| US 2021/0135209 A1 | 06 May 2021 | JP 2022-553798 A<br>WO 2021/137938 A2<br>EP 4055650 A2<br>KR 10-2022-0093133 A<br>CN 114788049 A<br>CA 3157142 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007115548 A